# EUROPEAN PATENT APPLICATION

(11) **EP 2 499 905 A1**
(43) Date of publication of application: **19.09.2012**
(21) Application number: 10829558.5
(22) Date of filing: 15.10.2010
(51) Int. Cl.: A01G 31/04

(54) **AUTOMATED SYSTEM FOR HYDROPONIC CULTIVATION OF VEGETABLES**

(30) Priority: 12.11.2009 ES 200902150
(71) Applicant: New Growlng Systems, S.L., 04640 Pulpi (Almeria) (ES)
(72) Inventor: BELMOTE, Lorenzo, 04610 Pulpi (Almeria) (ES)
(74) Representative: Gonzalez Palmero, Fé
(86) International application number: PCT/ES2010/000417
(87) International publication number: WO 2011/058201

(57) **Abstract**

Starting from two parcels (1 and 2), separated by an intermediate aisle (3) and preferably equal to each other, a plurality of cultivation lines (4) is established in each one of them, and consist of conduits for the circulation of the nutrient solution for the plants and further acting as physical support therefor, a frontal planting area (5) being defined in the first parcel (1) with workstations for several operators (6), wherefrom the aforementioned cultivation lines (4) are moved to the opposite end of the parcel, to transfer them one-by-one from said rear end of the parcel (1) to the parcel (2), where they move in the opposite direction to the harvesting area (11), also established at the front end of the parcel (2). Therefore, a 300% increase in the planting density is achieved and the number of cycles per year is practically doubled, while a drastic reduction in labour force is also achieved.

## Description

### OBJECT OF THE INVENTION

The present invention relates to an automated system for the hydroponic cultivation of vegetables, such as, for example, lettuce, but which is obviously applicable to other types of vegetables, fundamentally intended for human use.

The object of the invention is to achieve a maximum use of the surface area to be cultivated, i.e., to achieve the greatest number of plants per unit of surface area to be cultivated, without the slightest damage for the cultivation.

The invention is thus situated in the field of the agriculture industry.

### BACKGROUND OF THE INVENTION

As is known, the traditional cultivation of plants of the previously mentioned type is carried out in the ground, forming parallel lines of plants, wherebetween are defined lines that permit both the task of planting as well as the subsequent task of harvesting, both being carried out by operators moving along each and every one of the aforementioned lines.

The plants grow at the expense of the nutrients existing in the soil, so the periodic tasks of fertilizing, ploughing, etc. are required, which cuts down the number of annual productive cycles provided by the land.

In the specific case of lettuce cultivation, in this type of planting, the planting density is around 65,000 plants per hectare and cycle, producing 2.5 cycles per year, and that done with a large consumption of water and fertilizers, as well as with very large labour force participation, with its corresponding repercussion regarding costs.

This information will depend greatly on the production area. This is for Spain. Depending on the country and its climatology, it will have more or less cultivation cycles per year.

### DESCRIPTION OF THE INVENTION

The automated cultivating system proposed by the invention is based on the known hydroponic irrigation system, i.e. on soil-free cultivation, wherein a nutrient solution flows through a closed circuit via conduits made up of a multi-band of different levels where the aeration of the root system, which simultaneously consists of the physical support of the plants, is permitted. The plants then take the necessary nutrients from said solution, which is replaced at a suitable point of the aforementioned closed circuit, so that the nutrients are absorbed by the plants.

The aforementioned conduits shall preferably (but not exclusively) be those shown by Patent of Invention 9601651, of which the current applicant is holder.

The invention consists of equipping said conduits, composed of a multi-band of different levels which permits the aeration of the root system, mobile, as will be observed below, so that it adopts the most ideal position at all times, not only for the growth of the plants but to perform all of the planting and harvesting operations, with the automated system proposed being able to exceed the 65,000 plants per hectare and cycle previously mentioned, reaching 206,000 plants, while the also aforementioned 2.5 cycles/year can be doubled to 5 cycles. This data can also vary depending on the cultivation area, and can even reach 8 cycles.

To do this, and more specifically, according to the system of the invention, the available land is divided into two adjoining parcels, preferably equal, separated by an aisle between them, a plurality of transversal cultivation lines being established in each parcel, each one of them materialised in a hydroponic cultivation conduit of those previously mentioned, but with the special feature that said cultivation lines are mobile, as they can travel along any of the two parcels and move from one parcel to the other.

Specifically, the front end of one of the parcels consists of the planting area, while the front end of the other parcel consists of the harvesting area, only end where the workstations for the operators are situated. The operators do not need to access either of the two parcels at any point during the production cycle.

Established at both the front end of the two parcels and at the rear end thereof are transfer means capable of moving the empty cultivation lines, after harvesting, of the harvesting area to the planting area, and at the rear end of the parcels in the opposite direction, defining a closed circuit so that each cultivation line covers the two parcels longitudinally, from the planting area of one of them to the harvesting area of the other, wherefrom it again moves to the planting area of the former.

This transfer is carried out with the collaboration of elevated rails whereon slide carts which take the cultivation lines from the harvesting area one-by-one. Once said harvesting has been performed, the lines are lifted above the operators and moved to the planting area, where other operators perform the planting operations after which the entire cultivation line array is moved towards the back of the first parcel, while the last of said cultivation lines is transferred to the second parcel by means of the second elevated rail and in the same manner.

Within each parcel the frontal and rear movement of the cultivation lines is carried out by a moving chain, so that the joined cultivation conduits make contact with each other, making full use of the available surface area, which permits a marked increase in the previously mentioned planting density.

Nevertheless, means of distancing the cultivation lines can be planned. Keeping said lines together when the plants are smaller, these means progressively separate the lines as the plants grow so that they receive more light and reach a greater volume.

Regardless of the savings in water and fertilizer which result from the hydroponic cultivation system, a notable decrease in costs and labour force is achieved, given that the operators, as has been mentioned above, do not have to access the land, i.e. the aforementioned parcels, to either plant or harvest, jobs which are done in a peripheral area of the parcels, practically outside of them.

### DESCRIPTION OF THE DRAWINGS

In order to complement the description which will be carried out below and with the object of helping towards a better understanding of the characteristics of the invention, in accordance with a preferred practical embodiment thereof, a single set of drawings has been included as an integral part of said description wherein a farm with the automated hydroponic vegetable cultivation system proposed by the invention has been represented schematically and in plan view, in an illustrative and non-limitative character:

### PREFERRED EMBODIMENT OF THE INVENTION

It is observed in the highlighted figure how, in accordance with the automated system proposed, the farm available or intended for the cultivation is divided into two parcels (1 and 2), laterally adjacent and preferably separated from each other by an intermediate aisle (3), both the parcel (1) and the parcel (2) being completely occupied by a plurality of transversal cultivation lines (4), based on conduits for the nutrient solution, in closed circuit, which also constitutes the physical support for the plants which are planted in each one of them.

Established at the front end of the parcel (1) is the planting area (5), where an appropriate number of operators (6), duly distributed next to the front edge of said parcel (1), perform the assembly of seedlings or plants coming from the seed bed on the polyethylene bags which constitute said cultivation lines.

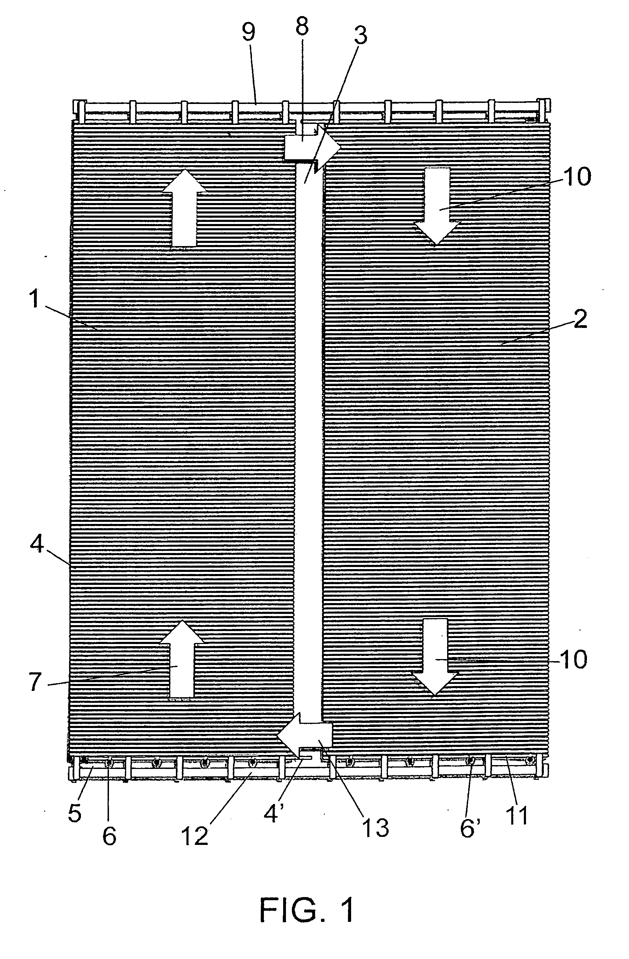

After each cultivation line has been filled, it is automatically pulled by suitable mechanical means, moving with chains towards the back of the rest of the cultivation lines of the parcel (1) according to the arrow (7) of the figure. Simultaneously, a space capable of absorbing that linear movement of the cultivation lines will have been created at the rear end of the parcel (1), so that the last of the cultivation lines of said parcel (1) is moved according to the arrow (8) through longitudinal movement towards the parcel (2), using for this an elevated rail (9), with a mobile cart or any similar element, capable of gripping each cultivation line (4), lifting it, moving it towards the other parcel and moving back to the general plane of the last cultivation line.

A frontal movement is simultaneously produced in the second parcel, according to the arrows (10), so that when a cultivation line (4) reaches the end area of the parcel (2), specifically the harvesting area (11), other operators (6') remove the plants from the end cultivation line (4), this remaining empty to be transferred back to the planting area, determining a closed cycle, with the collaboration of another elevated rail (12), structurally and functionally the same as the back rail (9) and with the movement shown by the arrow (13), next to which appears a cultivation line (4), which is in an intermediate transferring situation, i.e. without having arrived at the final position over the planting area.

As deduced from what has just been put forward, at the moment when the harvesting of the plants, such as lettuce, is produced, in the area (11) of the second parcel, the corresponding cultivation line is transferred to the first planting area (5), where a new line of plants is received, so that there is no dead time, which permits the number of productive cycles per year to be doubled, as previously mentioned.

Clearly, both the transfer means from one parcel to another for the cultivation lines and the means of moving said cultivation lines within each parcel can be vary greatly, without affecting the essence of the invention, in the same way that the actuation of such means can be completely automatic and duly programmed, which forces the operators to work at a specific pace, or can be actuated at will by one of said operators.

## Claims

1. Automated hydroponic cultivation system for vegetables, such as lettuce, wherein cultivation lines materialised in conduits composed of a multi-band of different levels is used, where aeration of the root system is permitted, and which is of variable longitude for a nutrient solution which flows in closed circuit to feed the plants so that the conduits constitute the physical support thereof, **characterised in that** therein participate two parcels (1 and 2), laterally adjacent and separated by an intermediate aisle (3), establishing in each one of said parcels a plurality of transversal cultivation lines (4) which can be moved along the parcel and transferred from one parcel to the other both at the front end and the rear end thereof, so that said cultivation lines (4) are also moveable with a closed cycle, a planting area (5) with fixed places for a group of operators (6) being defined at the front end of the first parcel (1), and a harvesting area (11) at the front end of the second parcel (2) for another group of operators (6'), all of this so that the development of the plants is produced during the path of the entire cultivation line from the planting area to the harvesting area, and at the same time at which the harvesting of a cultivation line is carried out, said empty line passing to the planting area to receive a new group of seedlings or new plants.

2. Automated hydroponic vegetable cultivation system, according to claim 1, **characterised in that** the transfer from the harvesting area to the planting area is carried out with the participation of an elevated rail (5) whereon a mobile cart or such like equipped with gripping and lifting/descending means for the cultivation lines (4) is provided, the transferring means established at the back or rear end of the parcels (1 and 2) being substantially equal, for the transfer of the cultivation lines (4) from the first parcel to the second.

3. Automated hydroponic vegetable cultivation system, according to claim 1, **characterised in that** the movement of the cultivation lines (4) within each parcel is carried out by means of pushing the last cultivation line (4') incorporated to each parcel from the other, and simultaneous pulling of the remaining cultivation lines.
